# EUROPÄISCHE PATENTSCHRIFT

(11) **EP 2 468 589 B1**
(45) Veröffentlichungstag und Bekanntmachung des Hinweises auf die Patenterteilung: **26.12.2012**
(21) Anmeldenummer: 11188172.8
(22) Anmeldetag: 08.11.2011
(51) Int. Cl.: B60T 1/087, B60T 10/02, F16D 57/00

(54) **Verfahren zum Bestimmen von Anordnungspositionen bei einem hydrodynamischen Retarder**
Method for determining assembly positions in a hydrodynamic retarder
Procédé de détermination des positions d'agencement dans un retardateur hydrodynamique

(30) Priorität: 21.12.2010 DE 102010063616
(43) Veröffentlichungstag der Anmeldung: 27.06.2012
(73) Patentinhaber: ZF Friedrichshafen AG, 88038 Friedrichshafen (DE)
(72) Erfinder: Bayer, Ewgeni, 88048 Friedrichshafen (DE)

(56) Entgegenhaltungen:
- WO-A1-98/35170
- WO-A1-03/093695
- DE-A1- 4 420 204

## Beschreibung

Die vorliegende Erfindung betrifft ein Verfahren zum Bestimmen einer exzentrischen Anordnungsposition einer Statorachse bei einem hydrodynamischen Retarder gemäß der im Oberbegriff des Patentanspruches 1 näher definierten Art und ein Verfahren zum Bestimmen einer Anordnungsposition von Einlassspirale und/oder Auslassspirale am Unfang des Retarders gemäß der im Oberbegriff des Patentanspruches 6 näher definierten Art.

Das Dokument WO 98/35170 A1 offenbart einen hydrodynamischen Retarder mit einem Rotorgehäuse, das einen Rotor umfasst, einem Statorgehäuse, das einen Stator umfasst, wobei Rotor- und Statorgehäuse derart miteinander verbunden sind, dass zwischen Rotor und Stator ein Spalt ausgebildet wird und der Retarder Mittel zum axialen Verschieben des Stators gegenüber dem Rotor umfasst. Die Mittel zum axialen Verschieben umfassen Mittel zum selbsttätigen Verbringen des Stators aus einer ersten in eine zweite Position.

Aus der Druckschrift DE 10 2007 025 676 A1 ist ein hydrodynamischer Retarder mit einem Rotorschaufelrad und einem Statorschaufelrad bekannt, die zusammen einen hydrodynamischen Kreis bilden, der mit einem Fluid zumindest teilweise befüllt wird. Die Fluidzufuhr bei dem hydrodynamischen Retarder weist eine tangentiale Fluidströmung ermöglichende Einlassspirale und Auslassspirale auf.

Ferner ist aus der Druckschrift DE 10 2007 034 562 A1 ein weiterer hydrodynamischer Retarder mit tangentialem Zu- und Abströmprinzip bekannt, bei dem der Stator eine vorgegebene Exzentrizität gegenüber dem Rotor aufweist.

Es hat sich gezeigt, dass mithilfe einer exzentrischen Statoranordnung bei dem Retarder Drehmomentschwingungen am Abtrieb eines Fahrzeuges, indem der Retarder eingebaut ist, verringert werden können. Weitere Untersuchungen haben jedoch ergeben, dass sich bei dem bekannten Retarder ein asymmetrisches bzw. unsymmetrisches Druckfeld im Druckraum ausbildet. Infolgedessen wird auch eine asymmetrische Druckverteilung an dem Rotor des Retarders bewirkt. Dies führt zu einem Kräfteungleichgewicht bzw. zu einem Kippmoment an dem Rotor. Dadurch wird die axiale Lagerung des Rotors stärker belastet. Zudem ergibt sich auch eine ungünstige Druckverteilung an der Dichtscheibe des Retarders, welches zu Verformungen an der Dichtscheibe führen kann.

Der vorliegenden Erfindung liegt die Aufgabe zu Grunde, ein Verfahren zum Bestimmen einer optimierten exzentrischen Anordnungsposition einer Statorachse und/oder einer optimierten Anordnungsposition von Einlassspirale und/oder Auslassspirale am Umfang bei einem hydrodynamischen Retarder vorzuschlagen, um die aufgrund des sich ergebenden asymmetrischen Druckfeldes auftretenden Belastungen bei dem Retarder zu vermeiden.

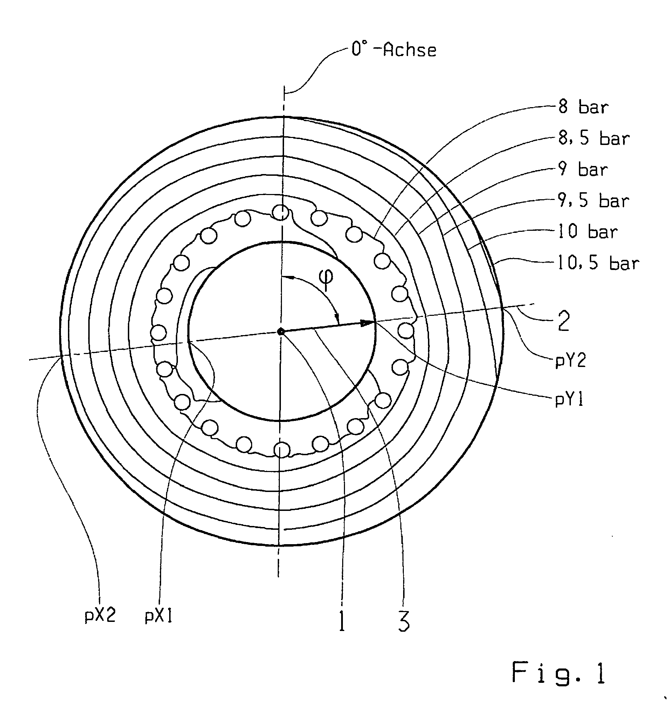

Die erfindungsgemäße Aufgabe wird durch die Merkmale des Patentanspruches 1 bzw. 6 gelöst. Vorteilhafte Ausgestaltungen ergeben sich aus den jeweiligen Unteransprüchen und der Zeichnung.

Die der Erfindung zu Grunde liegende Aufgabe wird zum Beispiel durch ein Verfahren zum Bestimmen einer exzentrischen Anordnungsposition einer Statorachse bei einem hydrodynamischen Retarder gelöst, indem bei vorgegebener Anordnungsposition von Einlassspirale und Auslassspirale die exzentrische Statoranordnung derart variiert wird, dass ein möglichst symmetrisches Druckfeld in dem Druckraum des Retarders bzw. an dem Rotor oder der Dichtscheibe erzeugt wird.

Auf diese Weise kann die aufgrund der Position von Einlassspirale und Auslassspirale am Umfang bzw. relativ zueinander verursachte Radialverschiebung des Druckfeldes mithilfe der Veränderung bzw. Variation der exzentrischen Anordnungsposition der Statorachse kompensiert werden, so dass die aus dem unsymmetrischen Druckfeld resultierenden Nachteile bei einem Retarder vermieden werden, dessen Statorposition der nach dem erfindungsgemäßen Verfahren bestimmten Anordnungsposition entspricht.

Um eine optimale exzentrische Anordnungsposition des Stators bzw. der Statorachse ermitteln zu können, kann aus dem bei einer zentrischen Anordnung des Stators vorgegebenen, asymmetrischen Druckfeld eine radiale Verschiebeachse bzw. Verschiebegerade ermittelt bzw. abgeleitet werden, wobei der Verschiebeachse des Druckfeldes eine Stator-Verschiebeachse bzw. -gerade für die Bestimmung der exzentrischen Anordnungsposition überlagert wird.

Zum Bestimmen der Druckfeld-Verschiebeachse und somit auch der Stator-Verschiebeachse wird zunächst ein absoluter Druckminimumwert in dem betrachteten

Druckfeld ermittelt. Im einfachsten Fall wird die Verschiebeachse durch den Schnittpunkt mit der zentralen Achse und dem Druckminimumwert definiert bzw. konstruiert. Es können jedoch weitere oder andere Punkte in dem Druckfeld ermittelt werden, um die Ausrichtung der Verschiebeachse noch genauer zu bestimmen. Durch die Variation des Winkels der Stator-Verschiebeachse bezogen auf eine 0-Achse der exzentrischen Statoranordnung kann das bereits durch das Befüllkonzept entstandene unsymmetrischen Druckfeld im Retarderdruckraum überlagert und dadurch die Asymmetrie gezielt reduziert bzw. aufgehoben werden.

Neben der Lage bzw. dem Winkel der Verschiebeachse im Druckfeld werden auch die Richtung und der Betrag der Verschiebung der Anordnungsposition des Stators ermittelt. Je nach konstruktiver Ausgestaltung des Retarders und dem daraus resultierenden asymmetrischen Druckfeld werden Richtung und Betrag der exzentrischen Verschiebung ausgewählt. Als Verschieberichtung kann vorzugsweise die dem abfallenden Druckgradient der radialen Druckverteilung entlang der Verschiebeachse entgegen gesetzte Richtung gewählt werden, um die Asymmetrie zu kompensieren. Der Betrag oder die Dimension der Verschiebung entlang der gewählten Richtung kann aus dem Grad der Asymmetrie bzw. aus dem Betrag, um den das Druckfeld in radialer Richtung verschoben ist, ermittelt werden.

Die der Erfindung zu Grunde liegende Aufgabe wird auch durch ein Verfahren gelöst, bei dem bei vorgegebener exzentrischer Anordnungsposition der Statorachse die Anordnungsposition von Einlassspirale und/oder Auslassspirale am Umfang des Retarders in Abhängigkeit der Asymmetrie des Druckfeldes im Druckraum derart verändert wird, dass möglichst wieder ein symmetrisches Druckfeld hergestellt wird.

Somit wird bei der weiteren vorgeschlagenen Verfahrensweise anstelle der Variation der exzentrischen Statoranordnung das Befüllkonzept derart verändert, bis auch bei der festgelegten exzentrischen Statoranordnung ein symmetrisches Druckfeld im Retarderdruckraum erzeugt wird.

Es ist auch denkbar, dass die beiden vorgeschlagenen Verfahren miteinander kombiniert werden, so dass dadurch ein Synergieeffekt der beiden Einflussgrößen von Position der Einlass- und Auslassspirale und der exzentrischen Statoranordnung positiv genutzt werden, um die unsymmetrische Druckverteilung in dem Druckraum des Retarders bzw. an dem Rotor oder der Dichtscheibe auszugleichen bzw. aufzuheben.

Darüber hinaus wird von der vorliegenden Erfindung auch ein hydrodynamischer Retarder z. B. mit einem zentral angeordneten Rotor und mit einem dazu exzentrisch angeordneten Stator sowie mit eine tangentiale Fluidströmung ermöglichender Einlassspirale und Auslassspirale beansprucht, bei dem eine optimierte exzentrische Anordnungsposition des Stators und/oder eine optimierte Umfangs-Anordnungsposition von Einlassspirale und/oder Auslassspirale bzw. relativ zueinander mithilfe zumindest einer der beiden vorgeschlagenen Verfahrensweisen ermittelt worden ist.

Im Weiteren wird die Erfindung anhand der Zeichnung weiter beschrieben. Die einzige Figur der Erfindung zeigt exemplarisch ein Fluid-Druckfeld an der der Dichtscheibe zugewandten Rückseite eines Rotors eines Retarders.

Der Rotor des Retarders ist mit einer Getriebewelle verbunden, sodass eine zentrale bzw. zentrisch bezogen auf den Retarder angeordnete Rotorachse 1 vorgesehen ist. Das asymmetrische Druckfeld zeigt die Druckverteilung in dem Druckraum des Retarders an der Rückseite des Rotors, wobei ausgehend von der zentralen Rotorachse 1 im inneren Bereich (weißer Kreis) Umgebungsdruck herrscht, da dieser Bereich nicht zum Druckraum des Retarders zählt. In dem Druckraum wird das Druckfeld durch um die zentrale Rotorachse 1 laufende Isobaren dargestellt. Zur Darstellung des Druckfeldes sind die simulierten bzw. gemessenen Druckwerte an der Rückseite des Rotors z. B. in eine bezogen auf die zentrale Rotorachse axiale Ebene projiziert, die das Druckfeld abbildet.

Vorgegeben ist somit beispielhaft ein asymmetrisches Druckfeld an der Rotorrückseite. Die asymmetrische Druckverteilung ergibt sich aufgrund der Anordnung am Umfang bzw. Umfangsposition von Einlass- und Auslassspirale bei dem Retarder, bei dem die Statorachse bezogen auf die zentrale Rotorachse 1 zentrisch angeordnet ist. Aus dem durch Messung oder durch Simulation erhaltenen Druckfeld und den dazugehörigen Druckmessergebnissen kann im einfachsten Fall ein Druckminimumwert pX1 bestimmt werden, um eine Druckfeld-Verschiebeachse 2 des radial verschobenen Druckfeldes zu ermitteln. Die Verschiebeachse 2 wird durch den Druckminimumwert pX1 und den Schnittpunkt mit der zentralen Achse 1 konstruiert bzw. angegeben. Dieser Verlauf kann auch durch die Bestimmung weiterer Messwerte verifiziert werden. Neben dem Druckminimumwert pX1 kann dazu auch ein Druckmaximumwert pY2 bestimmt werden.

Der Druckminimumwert pX1 ist der Druckmesspunkt mit dem geringsten Druck im gesamten Druckfeld und der Druckmaximumwert pY2 ist der Druckmesspunkt mit dem maximalen Druck im gesamten Druckfeld. Aus dem Verlauf der Isobaren ergibt sich beispielsweise ein Druckminimumwert pX1 von etwa 6,5 bar und ein Druckmaximumwert pY2 von etwa 10,5 bar in dem exemplarisch dargestellten Druckfeld im Druckraum des Retarders. Des Weiteren sind die Druckmesswerte pX2 und pY1 in dem Druckfeld eingetragen, wobei folgende Bedingung zwischen den Druckmesswerten gegeben ist: pX1 <pY1 und pX2<pY2. Die radiale Verschiebeachse 2 kann bevorzugt durch die ermittelten Druckmesswerte pX1, pY1 und pX2, pY2 festgelegt werden.

Die ermittelte Verschiebeachse 2, welche die radiale Verschiebung des asymmetrischen Druckfeldes angibt, definiert auch die der Verschiebeachse 2 überlagerte Stator-Verschiebeachse 3 zum Ermitteln der exzentrischen Anordnungsposition der Statorachse in dem Retarder. Somit ist die Winkelposition durch den Winkel ϕ bezogen zu einer 0°-Achse im Druckfeld festgelegt. Die Richtung der Verschiebung der exzentrischen Stator-Anordnungsposition entlang der Verschiebeachse 3 ist dem abfallenden Gradienten der radialen Druckverteilung entlang der Verschiebeachse entgegengesetzt. Dies ist durch den Pfeil 3, der die Verschiebeachse 3 darstellen soll, in der Figur angedeutet. Mit anderen Worten gesagt, wird die Verschiebung der exzentrischen Anordnungsposition der Statorachse in die Richtung der Druckfeld-Verschiebeachse 2 realisiert, in der sich der größere Druckgradient bei der radialen Druckverteilung entlang der radialen Druckfeld-Verschiebeachse 2 ergibt. In dem dargestellten Druckfeld ist der Druckgradient entlang der radialen Druckverteilung von dem Druckmesswert pY1 zum Druckmesswert pY2 größer als der Druckgradient entlang der radial Druckverteilung von dem Druckmesswert pX1 zum Druckmesswert pX2, sodass sich die mit dem Pfeil 3 angedeutete radiale Verschiebung für die Statoranordnung ergibt.

Der Betrag bzw. die Dimension, um den die Rotorachse exzentrisch verschoben werden soll, ergibt sich aus dem Maß der Asymmetrie des vorgegebenen Druckfeldes. Das Maß der Asymmetrie bzw. der Betrag der radialen Verschiebung des Druckfeldes kann aus dem Verhältnis der maximalen radialen Druckverteilung zwischen den Druckmesspunkten pY1 und pY2 einerseits und der minimalen radialen Druckverteilung zwischen den Druckmesspunkten pX1 und pX2 andererseits entlang der Stator-Verschiebeachse 3 ermittelt werden. Je größer der Unterschied der Gradienten der beiden Radialdruckverteilungen ist, desto größer kann vorzugsweise auch der Betrag zum Verschieben der exzentrischen Anordnungsposition der Statorachse entlang der Verschiebeachse 3 gewählt werden.

Zusammenfassend wird der Ausgleich bzw. die Aufhebung eines unsymmetrischen bzw. asymmetrischen Druckfeldes dadurch erreicht, dass aus den Messergebnissen des Druckfeldes bei festgelegter Umfangsposition von Einlass- und Auslassspirale zumindest der Druckminimumwert pX1 und evtl. zusätzlich der Druckmaximumswert pY2 im gesamten Druckfeld ermittelt wird, um dadurch die Position und Lage der Verschiebeachse 2 bzw. 3 festzulegen und die erforderliche Exzentrizität der Statorachse in Abhängigkeit des Grades der Asymmetrie abzuleiten. Mithilfe der auf diese Weise bestimmten Anordnungsposition der Statorachse können die erforderlichen konstruktiven Änderungen an dem Retarder zum Realisieren der optimierten Statorposition vorgenommen werden.

Somit wird die Optimierung der Druckverteilung bzw. des Druckfeldes zunächst durch Variation der Winkelposition bzw. des Winkels ϕ und der Dimension der Radialverschiebung der exzentrischen Statoranordnung vorgenommen. Eine Änderung an der exzentrischen Statoranordnung stellt einen geringeren konstruktiven Änderungsaufwand an dem Retarder dar. Grundsätzlich ist jedoch auch eine umgekehrte Vorgehensweise mit dem Variationsparameter Winkelposition bzw. Umfangsposition von Einlass- und Auslassspirale oder auch eine Kombination der beiden erfindungsgemäß vorgeschlagenen Verfahren ebenfalls eine zielführende Lösung.

### Bezugszeichen

- 1: zentrale Achse des Retarders bzw. Rotorachse
- 2: Verschiebeachse des Druckfeldes
- 3: Verschiebeachse der exzentrischen Anordnungsposition des Stators
- pX1: Druckminimumwert im Druckfeld
- pY2: Druckmaximumswert im Druckfeld
- pX2: Druckmesswerte
- pY1: Druckmesswerte
- ϕ: Winkel bezogen auf die 0°-Achse

## Patentansprüche

1. Verfahren zum Bestimmen einer exzentrischen Anordnungsposition einer Statorachse bezogen auf eine zentrale Rotorachse (1) bei einem hydrodynamischen Retarder bei vorgegebener Anordnungsposition von eine tangentiale Fluidströmung ermöglichender Einlassspirale und/oder Auslassspirale, **dadurch gekennzeichnet, dass** die exzentrische Anordnungsposition der Statorachse in Abhängigkeit des durch die Anordnungsposition von Einlassspirale und/oder Auslassspirale am Umfang des Retarders vorgegebenen asymmetrischen Fluid-Druckfeldes im Druckraum des Retarders derart verändert wird, dass ein zumindest im Wesentlichen symmetrisches Druckfeld erzeugt wird.

2. Verfahren nach Anspruch 1, **dadurch gekennzeichnet, dass** eine Druckfeld-Verschiebeachse (2) bei dem bei zentrischer Anordnungsposition des Stators radial verschobenen Druckfeld ermittelt wird, wobei die Druckfeld-Verschiebeachse (2) einer Stator-Verschiebeachse (3) für die Bestimmung der exzentrischen Anordnungsposition der Statorachse entspricht.

3. Verfahren nach Anspruch 2, **dadurch gekennzeichnet, dass** die Lage der Druckfeld-Verschiebeachse (2) in dem Druckfeld durch zumindest den Druckminimumwert (pX1) in dem Druckfeld und durch einen Schnittpunkt mit der zentralen Rotorachse (1) festgelegt wird.

4. Verfahren nach einem der Ansprüche 2 oder 3, **dadurch gekennzeichnet, dass** die Verschiebung der exzentrischen Anordnungsposition der Statorachse in die Richtung der Druckfeld-Verschiebeachse (2) durchgeführt wird, in der sich der größere Druckgradient bei der radialen Druckverteilung entlang der Druckfeld-Verschiebeachse (2) ergibt.

5. Verfahren nach einem der Ansprüche 2 bis 4, **dadurch gekennzeichnet, dass** der Betrag der Verschiebung der Anordnungsposition der Statorachse zumindest in Abhängigkeit des Betrages der radialen Verschiebung des Druckfeldes ermittelt wird.

6. Verfahren zum Bestimmen einer Anordnungsposition von Einlassspirale und/oder Auslassspirale am Umfang bei einem hydrodynamischen Retarder bei vorgegebener exzentrischen Anordnungsposition einer Statorachse bezogen auf eine zentrale Rotorachse (1), **dadurch gekennzeichnet, dass** die Anordnungsposition von Einlassspirale und/oder Auslassspirale am Umfang des Retarders in Abhängigkeit des durch die exzentrische Anordnungsposition der Statorachse vorgegebenen asymmetrischen Fluid-Druckfeldes im Druckraum des Retarders derart verändert wird, dass ein zumindest im Wesentlichen symmetrisches Druckfeld erzeugt wird.

7. Verfahren nach Anspruch 6, **dadurch gekennzeichnet, dass** mit dem bei einer exzentrischen Anordnungsposition des Stators radial verschobenen Druckfeld eine Druckfeld-Verschiebeachse (2) festgelegt wird, wobei in Abhängigkeit der Druckfeld-Verschiebeachse (2) eine Anordnungsposition am Unfang des Retarders für die Einlassspirale und/oder die Auslassspirale in dem Druckfeld bezogen auf die zentrale Rotorachse (1) festgelegt wird.

8. Verfahren nach einem der vorangehenden Ansprüche, **dadurch gekennzeichnet, dass** das Druckfeld an fluidbenetzten Flächen einer Rotorrückseite oder einer Dichtscheibe in dem Druckraum des Retarders durch Simulation oder durch Messen ermittelt wird.

## Claims

1. Method for determining an eccentric arrangement position of a stator axis in relation to a central rotor axis (1) in a hydrodynamic retarder in the case of a predetermined arrangement position of inlet spiral and/or outlet spiral which permits a tangential fluid flow, **characterized in that** the eccentric arrangement position of the stator axis is varied, in dependence on the asymmetrical pressure field predetermined by the arrangement position of inlet spiral and/or outlet spiral on the circumference of the retarder in the pressure chamber of the retarder, such that an at least substantially symmetrical pressure field is generated.

2. Method according to Claim 1, **characterized in that** a pressure field displacement axis (2) for the pressure field displaced radially in the case of a central arrangement position of the stator is determined, wherein the pressure field displacement axis (2) corresponds to a stator displacement axis (3) for the determination of the eccentric arrangement position of the stator axis.

3. Method according to Claim 2, **characterized in that** the position of the pressure field displacement axis (2) in the pressure field is defined by at least the pressure minimum value (pX1) in the pressure field and by a point of intersection with the central rotor axis (1).

4. Method according to either of Claims 2 or 3, **characterized in that** the displacement of the eccentric arrangement position of the stator axis is performed **in that** direction of the pressure field displacement axis (2) which exhibits the greater pressure gradient in the radial pressure distribution along the pressure field displacement axis (2).

5. Method according to one of Claims 2 to 4, **characterized in that** the magnitude of the displacement of the arrangement position of the stator axis is determined at least in dependence on the magnitude of the radial displacement of the pressure field.

6. Method for determining an arrangement position of inlet spiral and/or outlet spiral on the circumference in a hydrodynamic retarder in the case of a predetermined eccentric arrangement position of a stator axis in relation to a central rotor axis (1), **characterized in that** the arrangement position of inlet spiral and/or outlet spiral on the circumference of the retarder is varied, in dependence on the asymmetrical fluid pressure field predetermined by the eccentric arrangement position of the stator axis in the pressure chamber of the retarder, such that an at least substantially symmetrical pressure field is generated.

7. Method according to Claim 6, **characterized in that**, with the radially displaced pressure field in the case of an eccentric arrangement position of the stator, a pressure field displacement axis (2) is defined, wherein an arrangement position on the circumference of the retarder for the inlet spiral and/or the outlet spiral is defined in the pressure field in relation to the central rotor axis (1) in dependence on the pressure field displacement axis (2).

8. Method according to one of the preceding claims, **characterized in that** the pressure field on fluid-wetted surfaces of a rotor rear side or of a sealing disc in the pressure chamber of the retarder is determined by simulation or by measurement.

## Revendications

1. Procédé pour déterminer une position d'agencement excentrique d'un axe de stator par rapport à un axe de rotor central (1) dans un retardateur hydrodynamique dans le cas d'une position d'agencement prédéterminée d'une spirale d'entrée et/ou d'une spirale de sortie permettant un écoulement fluidique tangentiel, **caractérisé en ce que** la position d'agencement excentrique de l'axe de stator est modifiée en fonction du champ de pression fluidique asymétrique prédéfini par la position d'agencement de la spirale d'entrée et/ou de la spirale de sortie au niveau de la périphérie du retardateur dans l'espace de pression du retardateur, de telle sorte qu'un champ de pression au moins sensiblement symétrique soit produit.

2. Procédé selon la revendication 1, **caractérisé en ce qu'**un axe de déplacement du champ de pression (2) est détecté lorsque le champ de pression est déplacé radialement pour une position d'agencement centrale du stator, l'axe de déplacement du champ de pression (2) correspondant à un axe de déplacement du stator (3) pour déterminer la position d'agencement excentrique de l'axe de stator.

3. Procédé selon la revendication 2, **caractérisé en ce que** la position de l'axe de déplacement du champ de pression (2) dans le champ de pression est établie par au moins la valeur minimale de pression (pX1) dans le champ de pression et par un point d'intersection avec l'axe de rotor central (1).

4. Procédé selon l'une quelconque des revendications 2 ou 3, **caractérisé en ce que** le déplacement de la position d'agencement excentrique de l'axe de stator est effectué dans la direction de l'axe de déplacement du champ de pression (2), dans laquelle s'obtient le plus grand gradient de pression pour une répartition de pression radiale le long de l'axe de déplacement du champ de pression (2).

5. Procédé selon l'une quelconque des revendications 2 à 4, **caractérisé en ce que** la valeur du déplacement de la position d'agencement de l'axe de stator est déterminée au moins en fonction de la valeur du déplacement radial du champ de pression.

6. Procédé pour déterminer une position d'agencement de la spirale d'entrée et/ou de la spirale de sortie à la périphérie dans un retardateur hydrodynamique dans le cas d'une position d'agencement prédéterminée d'un axe de stator par rapport à un axe de rotor central (1), **caractérisé en ce que** la position d'agencement de la spirale d'entrée et/ou de la spirale de sortie à la périphérie du retardateur est modifiée en fonction du champ de pression de fluide asymétrique prédéfini par la position d'agencement excentrique de l'axe de stator dans l'espace de pression du retardateur de telle sorte qu'un champ de pression au moins sensiblement symétrique soit produit.

7. Procédé selon la revendication 6, **caractérisé en ce qu'**avec le champ de pression déplacé radialement pour une position d'agencement excentrique du stator, un axe de déplacement du champ de pression (2) est établi, une position d'agencement étant établie en fonction de l'axe de déplacement du champ de pression (2) à la périphérie du retardateur pour la spirale d'entrée et/ou la spirale de sortie dans le champ de pression par rapport à l'axe de rotor central (1).

8. Procédé selon l'une quelconque des revendications précédentes, **caractérisé en ce que** le champ de pression au niveau de surfaces mouillées par du fluide d'un côté arrière du rotor ou d'un disque d'étanchéité dans l'espace de pression du retardateur est déterminé par simulation ou par mesure.
